# EUROPÄISCHE PATENTSCHRIFT

(11) **EP 3 758 644 B1**
(45) Veröffentlichungstag und Bekanntmachung des Hinweises auf die Patenterteilung: **10.04.2024**
(21) Anmeldenummer: 19706721.8
(22) Anmeldetag: 01.03.2019
(51) Int. Cl.: A61C 3/025

(54) **ZAHNMEDIZINISCHES PULVERSTRAHLGERÄT**
DENTAL POWDER JET DEVICE
APPAREIL À JET DE POUDRES DE SOINS DENTAIRE

(30) Priorität: 02.03.2018 EP 18159655
(43) Veröffentlichungstag der Anmeldung: 06.01.2021
(73) Patentinhaber: KaVo Dental GmbH, 88400 Biberach (DE)
(72) Erfinder: RÖSCH, Thomas, 88447 Warthausen (DE); DANGEL, Klaus, 88400 Biberach (DE); HAARMANN, Markus, 88400 Biberach (DE)
(74) Vertreter: Thun, Clemens
(86) Internationale Anmeldenummer: PCT/EP2019/055136
(87) Internationale Veröffentlichungsnummer: WO 2019/166625

(56) Entgegenhaltungen:
- EP-A1- 1 457 163
- WO-A1-02/074180
- US-A- 4 540 365
- US-B1- 6 277 003

## Beschreibung

Die Erfindung betrifft ein zahnmedizinisches Pulverstrahlgerät mit einem Behälter für ein abrasives Pulver, einer Düse und einer ersten Leitungsanordnung, die sich von einem Anschluss des Pulverstrahlgeräts durch den Behälter zu der Düse erstreckt und dazu ausgebildet ist, eine Mischung, gebildet aus dem Pulver und einem, dem Pulverstrahlgerät zur Verfügung gestellten ersten Fluid zu der Düse zu leiten.

Aus dem Stand der Technik ist ein solches Pulverstrahlgerät in Form eines zahnärztlichen Handstücks bekannt. Das Pulverstrahlgerät dient beispielsweise zum Entfernen von Zahnbelägen. In den Behälter kann das erste Fluid, hier in Form einer Druckluft eingeleitet werden; im Behälter wird dann diese Druckluft mit dem Pulver vermischt, so dass ein Pulver-Luft-Gemisch entsteht. Letzteres wird dann über die erste Leitungsanordnung zu der Düse weitergeleitet und - zusammen mit Wasser - über die Düse mit Überdruck nach Außen abgegeben, beispielsweise auf eine zu reinigende Zahnoberfläche.

Im Rahmen einer entsprechenden Zahnreinigung wird die Behandlung des zu reinigenden Zahnbereichs mit dem Pulverstrahlgerät üblicherweise wiederholt unterbrochen und der Zahnbereich mit Hilfe einer so genannten Luft-Wasser-Spritze von Pulver oder Zahnbelag-Abtrag gereinigt. Hierzu muss der Behandler das Pulverstrahlgerät beiseitelegen und zur Luft-Wasser-Spritze greifen. Dieser Arbeitsvorgang ist aufwändig und unterbricht in unerwünschter Weise den Arbeitsfluss.

In der EP 1 457 163 A1 wird ein dentales Pulverstrahlgerät beschrieben, welches als Eingangsmedium Wasser und Druckluft verarbeitet und einem mit dem Gerät verbundenen Handstück Luft oder ein Luft-Pulver-Gemisch zur Verfügung stellt. Das Mischen von Pulver und Luft findet hier also außerhalb des Handstücks statt. Die dem Gerät eingangsseitig zugeführte Druckluft wird an einem Verzweigungspunkt in zwei Teilleitungen aufgeteilt, wobei eine Leitung unmittelbar zu einem Anschluss für das Handstück führt. Die andere Teilleitung ist über den Pulverbehälter geführt und dient zum Bilden eines Luft-Pulver-Gemisches, welches über einen Ventilblock wahlweise dem Handstück zur Verfügung gestellt wird. Bei diesem Gerät wird also im aktiven Zustand dauerhaft Druckluft an das Handstück übermittelt, das Luft-Pulver-Gemisch kann wahlweise hinzugefügt werden.

Ferner zeigt die WO 02/074180 A1 ein Pulverstrahlgerät, bei dem über einen Fußanlasser einem mit dem Gerät verbundenen Handstück wahlweise Luft oder ein Luft-Pulver-Gemisch zugeführt werden kann. Ein eingangsseitiger Versorgungsblock stellt einerseits an einem ersten Anschluss Druckluft zur Verfügung, welche über einen Pulverbehälter geführt ist, wobei mittels eines Schlauchquetschventils die Möglichkeit besteht, diese Luft zu regulieren. Weiterhin wird über einen zweiten Anschluss eine sogenannte Chipblower-Luft zur Verfügung gestellt, die über eine zweite Leitung geführt wird und in die Leitung für das Luft-Pulver-Gemisch mündet. Das Zusammenführen beider Leitungsanordnungen erfolgt dabei in einem dem Pulverbehälter nachgeordneten Bereich, allerdings vor einem ausgangsseitigen Anschluss für das eigentliche Handstück.

Schließlich zeigt die US 6,277,003 B1 ein Pulverstrahlgerät zu Dentalzwecken, wobei hier spezielle Maßnahmen vorgesehen sind, um die Luft in einen Pulverbehälter derart einzuleiten, dass möglichst effizient das darin befindliche Pulver aufgewirbelt wird. Weiterhin erfolgt ein Überbrücken des Behälters mit Hilfe einer weiteren Druckluftleitung, wobei die zweite Leitung in einer dem Pulverbehälter nachgeordneten sog. Mischkammer wieder in den ersten Leitungsabschnitt, der für das Luft-Pulver-Gemisch vorgesehen ist, mündet. Am Ausgang des Geräts erfolgt dann der Anschluss an ein Handstück, mit dem letztendlich die zu behandelnde Oberfläche bearbeitet wird.

Weiterhin zeigt die US 4,540,365 A ein System mit einem Handgerät für die Zahnreinigung zur Abgabe eines mit abrasivem Material beladenen Strahls gegen einen zu reinigenden Zahn. Hierbei ist das System zum Anschluss an Quellen für unter Druck stehenden Flüssigkeiten und Gasen ausgebildet. Weiterhin umfasst das System das Handstück mit einem Behälter, der das abrasive Material enthält. Durch verschiedene Ventile am Handstück, welche jeweils einen Flüssigkeits- oder Gasstrom steuern, wird das abrasive Material aus dem Behälter in eine Mischkammer innerhalb einer Düse am Handstück transportiert. Die Flüssigkeits- oder Gasströme können in der Mischkammer mit dem mit Schleifmittel beladenen Strom kombiniert werden, so dass ein homogener Strom entsteht, der an einer einzigen Stelle des zu reinigenden Zahns abgegeben wird.

Der Erfindung liegt die Aufgabe zugrunde, ein verbessertes Pulverstrahlgerät anzugeben. Insbesondere soll dabei eine erleichterte Handhabung bei einer Zahnreinigung ermöglicht sein.

Diese Aufgabe wird gemäß der Erfindung mit dem in dem unabhängigen Anspruch 1 genannten Gegenstand gelöst. Besondere Ausführungsarten der Erfindung sind in den abhängigen Ansprüchen angegeben.

Gemäß der Erfindung ist ein zahnmedizinisches Pulverstrahlgerät vorgesehen, das einen Behälter für ein abrasives Pulver aufweist, eine Düse und eine erste Leitungsanordnung, die sich von einem Anschluss des Pulverstrahlgeräts durch den Behälter zu der Düse erstreckt und dazu ausgebildet ist, eine Mischung, gebildet aus dem Pulver und einem, dem Pulverstrahlgerät zur Verfügung gestellten ersten Fluid zu der Düse zu leiten. Weiterhin weist das Pulverstrahlgerät eine zweite Leitungsanordnung auf, die sich von dem Anschluss des Pulverstrahlgeräts erstreckt und die dazu ausgebildet ist, ein, dem Pulverstrahlgerät zur Verfügung gestelltes zweites gleichartiges Fluid an einer, dem Behälter für das abrasive Pulver nachgeordneten Stelle in die erste Leitungsanordnung einzuleiten, wobei an der Stelle, an der die zweite Leitungsanordnung in die erste Leitungsanordnung mündet, ein Ventil zum Freigeben und zum Sperren der zweiten Leitungsanordnung angeordnet ist.

Durch diese Gestaltung lässt sich erzielen, dass das zweite Fluid wahlweise ohne beigemischtes Pulver auf eine Behandlungsstelle abgegeben werden kann. So lässt sich mit dem Pulverstrahlgerät die Behandlungsstelle reinigen, ohne dass ein Nutzer des Pulverstrahlgeräts hierzu zunächst einen Wechsel von Handgeräten vornehmen muss. Der Arbeitsvorgang ist auf diese Weise erleichtert. Ferner führt die erfindungsgemäße Positionierung des Ventils im Bereich der Mündung der zweiten Leitungsanordnung in die erste Leitungsanordnung dazu, dass das zweite Fluid gezielt in die erste Leitungsanordnung geleitet werden und ein schneller Wechsel zwischen den durch das Gerät abgegebenen Medien stattfinden kann. Ferner besteht auch nicht die Gefahr, dass das abrasive Pulver ungewollt in Bereiche der zweiten Leitungsanordnung eindringt.

Erfindungsgemäß ist das Pulverstrahlgerät als ein Handgerät gestaltet, welches ein Griffteil sowie am vorderen Endbereich eine die Düse enthaltende Kanüle aufweist, wobei die Stelle, an der die zweite Leitungsanordnung in die erste Leitungsanordnung mündet, in einem Übergangsbereich zwischen dem Griffteil und der Kanüle ausgebildet ist. Das erfindungsgemäße Zusammenführen der Leitungsanordnungen findet also in dem Handgerät selbst statt, so dass sich ein besonders einfacher und kompakter Aufbau für das Pulverstrahlgerät ergibt.

Weiterhin ist das Ventil derart gestaltet, dass die zweite Leitungsanordnung für das zweite Fluid leitend mit der ersten Leitungsanordnung verbunden ist, wenn in der zweiten Leitungsanordnung ein höherer Druck herrscht als in der ersten Leitungsanordnung und dass die zweite Leitungsanordnung für das zweite Fluid nicht leitend mit der ersten Leitungsanordnung verbunden ist, wenn in der zweiten Leitungsanordnung ein niedrigerer Druck herrscht als in der ersten Leitungsanordnung. So lässt sich das Ventil lediglich über den Druck gesteuert öffnen und schließen. Insbesondere kann auf diese Weise durch entsprechendes Regeln des Drucks des ersten Fluids ein Öffnen und Schließen des Ventils bewirkt werden.

Vorzugsweise ist das Ventil nach Art eines Dichtrings gestaltet. Auf diese Weise lässt sich auf herstellungstechnisch besonders geeignete Weise der gewünschte Effekt erzielen.

Vorzugsweise weist die erste Leitungsanordnung eine erste Rohrleitung und die zweite Leitungsanordnung eine zweite Rohrleitung auf, welche sich um die erste Rohrleitung herum erstreckt, wobei beide Rohrleitungen in einen gemeinsamen Kammerbereich münden, der in einen sich zur Düse erstreckenden Endabschnitt der ersten Leitungsanordnung übergeht, und wobei das Ventil an einem Endbereich der zweiten Rohrleitung ausgebildet ist. Dabei kann ferner vorgesehen sein, dass der Dichtring am vorderen Ende der zweiten Rohrleitung angeordnet ist und eine Ventillippe bildet, welche am Außenumfang der ersten Rohrleitung anliegt. Diese Maßnahmen tragen dazu bei, dass ein sehr effizient arbeitendes und kompakt gestaltetes Ventil im Bereich der Mündung der zweiten Leitungsanordnung in die erste Leitungsanordnung realisiert werden kann.

Vorzugsweise sind in einem, der Stelle vorgeordneten Abschnitt der ersten Leitungsanordnung Mittel zum Freigeben oder Sperren des Abschnitts der ersten Leitungsanordnung angeordnet. So lässt sich erzielen, dass durch diese Mittel das Ventil geöffnet und geschlossen werden kann.

Vorzugsweise sind die Mittel zum Freigeben oder Sperren des Abschnitts der ersten Leitungsanordnung dem Behälter vorgeordnet ausgebildet. So lässt sich das erste Fluid gezielt in den Behälter leiten.

Vorzugsweise sind die Mittel zum Freigeben oder Sperren des Abschnitts der ersten Leitungsanordnung außerdem für ein gedrosseltes Freigeben des Abschnitts der ersten Leitungsanordnung ausgebildet. So lässt sich insbesondere erzielen, dass das erste Fluid mit beigemischtem Pulver von dem Pulverstrahlgerät über die Düse bei unterschiedlichen Drücken abgegeben werden kann. Die Mittel zum Freigeben oder Sperren des Abschnitts der ersten Leitungsanordnung sind dabei vorzugsweise mit einem Bedienelement gekoppelt, welches insbesondere als Drehring ausgebildet sein kann.

Vorzugsweise weist das Pulverstrahlgerät außerdem eine dritte Leitungsanordnung auf, die dazu ausgebildet ist, Wasser zu der Düse zu leiten. So lässt sich erzielen, dass die Mischung aus dem ersten Fluid und dem Pulver im Bereich der Düse mit dem Wasser vermischt wird. Dabei ist vorzugsweise vorgesehen, dass sich die dritte Leitungsanordnung getrennt von der ersten und zweiten Leitungsanordnung von dem Anschluss durch das Pulverstrahlgerät zur Düse erstreckt. Ferner weist das Pulverstrahlgerät weiterhin vorzugsweise Mittel zum Freigeben und zum Sperren der dritten Leitungsanordnung auf. So lässt sich die Wasserzufuhr vorzugsweise wahlweise zuschalten oder abschalten.

Die Düse ist vorzugsweise derart gestaltet, dass sich das Wasser im Bereich der Düse mit der über die erste Leitungsanordnung abgegebenen Mischung, gebildet aus dem Pulver und dem ersten Fluid, vermischt. Hierdurch ist sichergestellt, dass das üblicherweise wasserlösliche abrasive Pulver unmittelbar nach dem entsprechenden Bearbeiten der Zahnoberfläche durch das Wasser aufgelöst und entfernt werden kann.

Ggf. können die Mittel zum Freigeben und zum Sperren des Abschnitts der ersten Leitungsanordnung und die Mittel zum Freigeben und zum Sperren der dritten Leitungsanordnung derart in Abhängigkeit voneinander gestaltet sein, dass die dritte Leitungsanordnung freigegeben ist, wenn der Abschnitt der ersten Leitungsanordnung freigegeben ist und dass die dritte Leitungsanordnung gesperrt ist, wenn der Abschnitt der ersten Leitungsanordnung gesperrt ist. So lässt sich unter besonders einfacher Handhabung die Abgabe der Mischung aus dem ersten Fluid und dem Pulver und die Abgabe des Wassers einstellen.

Vorzugsweise weist das Pulverstrahlgerät weiterhin Mittel zum Freigeben oder zum Sperren der zweiten Leitungsanordnung auf. So lässt sich das zweite Fluid gezielt steuern.

Die Erfindung wird im Folgenden anhand eines Ausführungsbeispiels und mit Bezug auf die Zeichnungen näher erläutert. Es zeigen:
- Fig. 1: eine perspektivische Skizze eines anmeldungsgemäßen Pulverstrahlgeräts in Form eines Handgeräts,
- Fig. 2: eine Prinzip-Skizze zu einem anmeldungsgemäßen Pulverstrahlgerät,
- Figuren 3a bis 3c: schematische Skizzen zu unterschiedlichen Einstellungen des Ventils in der zweiten Leitungsanordnung und der Mittel zum Freigeben und zum Sperren eines Abschnitts der ersten Leitungsanordnung,
- Fig. 4: eine Skizze zu einer Gestaltung des Pulverstrahlgeräts, bei der die Mittel zum Freigeben und zum Sperren des Abschnitts der ersten Leitungsanordnung und die Mittel zum Freigeben und zum Sperren einer dritten Leitungsanordnung in Abhängigkeit voneinander gestaltet sind und
- Fig. 5: eine Skizze zu einer Gestaltung, bei der Mittel zum Freigeben und zum Sperren der drei Leitungsanordnungen in einer Versorgungseinheit angeordnet sind.

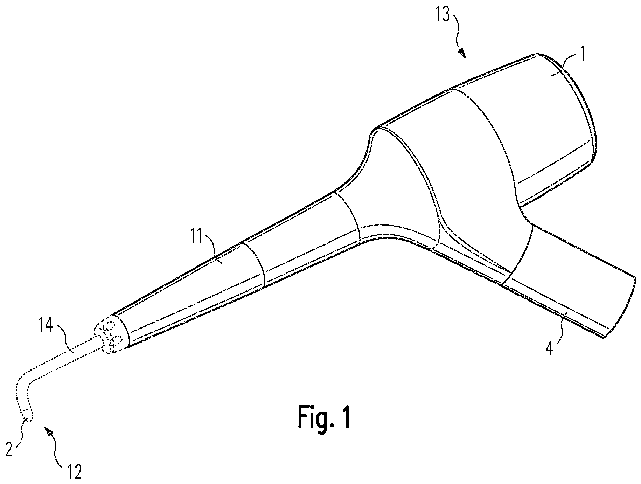

Fig. 1 zeigt eine perspektivische Skizze eines anmeldungsgemäßen Pulverstrahlgeräts. Das Pulverstrahlgerät ist besonders bevorzugt - wie gezeigt - als Handgerät gestaltet. Es weist einen Griffteil 11 zum Halten des Pulverstrahlgeräts während eines Pulverstrahl-Vorgangs auf. Das Pulverstrahlgerät ist insgesamt länglich, so dass ein vorderer Endbereich 12 von einem rückwärtigen Endbereich 13 unterschieden werden kann.

Das Pulverstrahlgerät weist einen Behälter 1 für ein abrasives Pulver auf,
vorzugsweise an seinem rückwärtigen Endbereich 13. An seinem vorderen Endbereich 12 weist das Pulverstrahlgerät eine Kanüle 14 auf, die an ihrem freien Ende eine Düse 2 aufweist.

Weiterhin weist das Pulverstrahlgerät einen Anschluss 4 auf, der - wie im Weiteren näher dargestellt - dazu ausgestaltet ist, in dem Pulverstrahlgerät ausgebildete Leitungsanordnungen mit Zufuhrleitungen leitend zu verbinden. Bei dem Anschluss 4 kann es sich insbesondere um eine Kupplung handeln, beispielsweise um eine Schnellkupplung, wie die so genannte Multiflex-Kupplung.

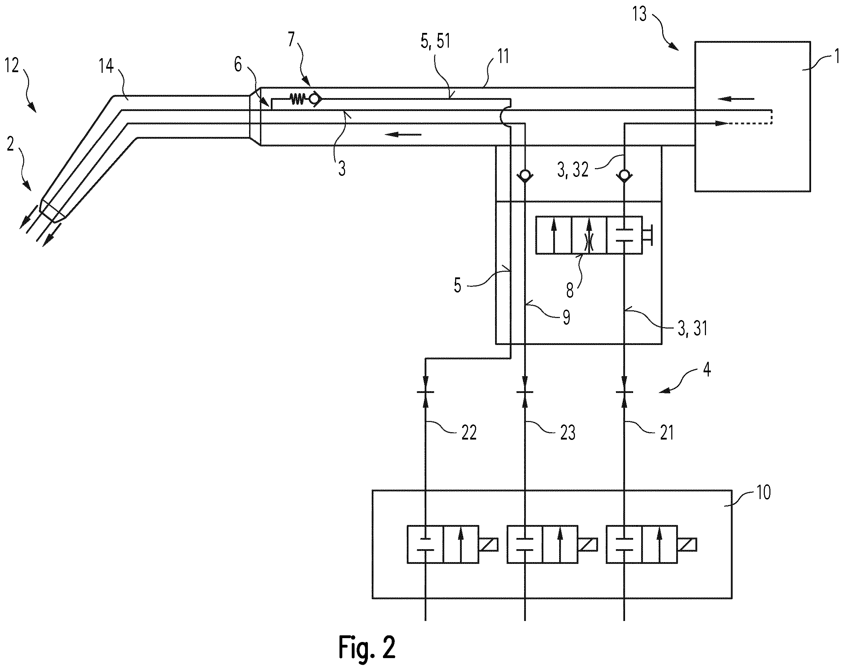

Fig. 2 zeigt eine schematische Prinzip-Skizze des Pulverstrahlgeräts. Das Pulverstrahlgerät umfasst eine erste Leitungsanordnung 3, die sich von dem Anschluss 4 durch den Behälter 1 zu der Düse 2 erstreckt. Diese Leitungsanordnung 3 ist dazu ausgebildet, eine Mischung, gebildet aus dem Pulver und einem, dem Pulverstrahlgerät zur Verfügung gestellten ersten Fluid zu der Düse 2 zu leiten.

Bei dem ersten Fluid handelt es sich beispielsweise um eine erste Luft. Die Gestaltung des Pulverstrahlgeräts ist vorzugsweise derart, dass das erste Fluid dem Pulverstrahlgerät unter einem ersten Überdruck stehend zur Verfügung gestellt werden kann. Der erste Überdruck kann dabei beispielsweise zwischen 2,5 bar und 3,5 bar betragen, also zum Beispiel 3 bar. Vorzugsweise ist die Gestaltung derart, dass das erste Fluid dem Pulverstrahlgerät von einer Versorgungseinheit 10 zur Verfügung gestellt werden kann, insbesondere mittels einer ersten Zufuhrleitung 21. Die erste Zuführleitung 21 kann sich dabei durch einen Versorgungsschlauch erstrecken, der sich zwischen der Versorgungseinheit 10 und dem Anschluss 4 des Pulverstrahlgeräts erstreckt.

Eine anmeldungsgemäße zahnmedizinische Anordnung umfasst ein anmeldungsgemäßes Pulverstrahlgerät und die Versorgungseinheit 10.

In einem Funktionsbetrieb kann das erste Fluid durch den ersten Überdruck angetrieben über den Anschluss 4 in die erste Leitungsanordnung 3 eingeleitet werden, gelangt so in den Behälter 1 und vermischt sich dort mit dem in dem Behälter 1 befindlichen Pulver, so dass die genannte Mischung, gebildet aus dem Pulver und dem ersten Fluid, entsteht. Im weiteren Verlauf wird dann diese Mischung - immer noch durch erhöhten Druck - durch die erste Leitungsanordnung 3 weiter vorangetrieben und schließlich über die Düse 2 unter Überdruck nach außen abgegeben, beispielsweise auf einen zu reinigenden Zahnbereich.

Weiterhin umfasst das Pulverstrahlgerät eine zweite Leitungsanordnung 5, die sich von dem Anschluss 4 erstreckt und die dazu ausgebildet ist, ein, dem Pulverstrahlgerät zur Verfügung gestelltes zweites Fluid an einer, dem Behälter 1 nachgeordneten Stelle 6 in die erste Leitungsanordnung 3 einzuleiten. Diese Stelle 6 bzw. die Mündung der zweiten Leitungsanordnung 5 in die erste Leitungsanordnung 3 befindet sich also zwischen dem Behälter 1 und der Düse 2. Wie in Fig. 2 angedeutet, kann die Stelle 6 bzw. Mündung beispielsweise in einem Übergangsbereich zwischen dem Griffteil 11 und der Kanüle 14 ausgebildet sein.

Vorzugsweise ist die Gestaltung derart, dass das zweite Fluid dem Pulverstrahlgerät von der Versorgungseinheit 10 zur Verfügung gestellt werden kann, insbesondere mittels einer zweiten Zufuhrleitung 22, die sich wiederum durch den Versorgungsschlauch erstrecken kann.

Das zweite Fluid ist vorzugsweise von der gleichen Art wie das erste Fluid, also beispielsweise ebenfalls Luft. Bei dem zweiten Fluid kann es sich also um eine zweite Luft handeln. Die Gestaltung des Pulverstrahlgeräts ist vorzugsweise derart, dass das zweite Fluid dem Pulverstrahlgerät unter einem zweiten Überdruck stehend zur Verfügung gestellt werden kann. Der zweite Überdruck kann dabei beispielsweise zwischen 0,5 bar und 1,5 bar betragen, also zum Beispiel 1 bar.

In einem Funktionsbetrieb kann das zweite Fluid durch den zweiten Überdruck angetrieben über den Anschluss 4 in die zweite Leitungsanordnung 5 eingeleitet werden, gelangt an der Stelle 6 in die erste Leitungsanordnung 3 und wird schließlich über die Düse 2 unter Überdruck nach außen abgegeben, beispielsweise auf den zu reinigenden Zahnbereich.

Vorzugsweise ist in der zweiten Leitungsanordnung 5 ein Ventil 7, insbesondere in Form eines Rückschlagventils zum Freigeben und zum Sperren der zweiten Leitungsanordnung 5 angeordnet. Das Ventil 7 ist vorzugsweise im Bereich der Mündung bzw. Stelle 6 ausgebildet.

Insbesondere ist dabei das Ventil 7 derart gestaltet, dass die zweite Leitungsanordnung 5 für das zweite Fluid leitend mit der ersten Leitungsanordnung 3 verbunden ist, wenn in der zweiten Leitungsanordnung 5 ein höherer Druck herrscht als in der ersten Leitungsanordnung 3, insbesondere an der Stelle 6 und dass die zweite Leitungsanordnung 5 für das zweite Fluid nicht leitend mit der ersten Leitungsanordnung 3 verbunden ist, wenn in der zweiten Leitungsanordnung 5 ein niedrigerer Druck herrscht als in der ersten Leitungsanordnung 3, insbesondere an der Stelle 6.

Die Gestaltung kann weiterhin so sein, dass das Ventil 7 geschlossen ist, wenn in der zweiten Leitungsanordnung 5 derselbe Druck herrscht wie in der ersten Leitungsanordnung 3, insbesondere an der Stelle 6.

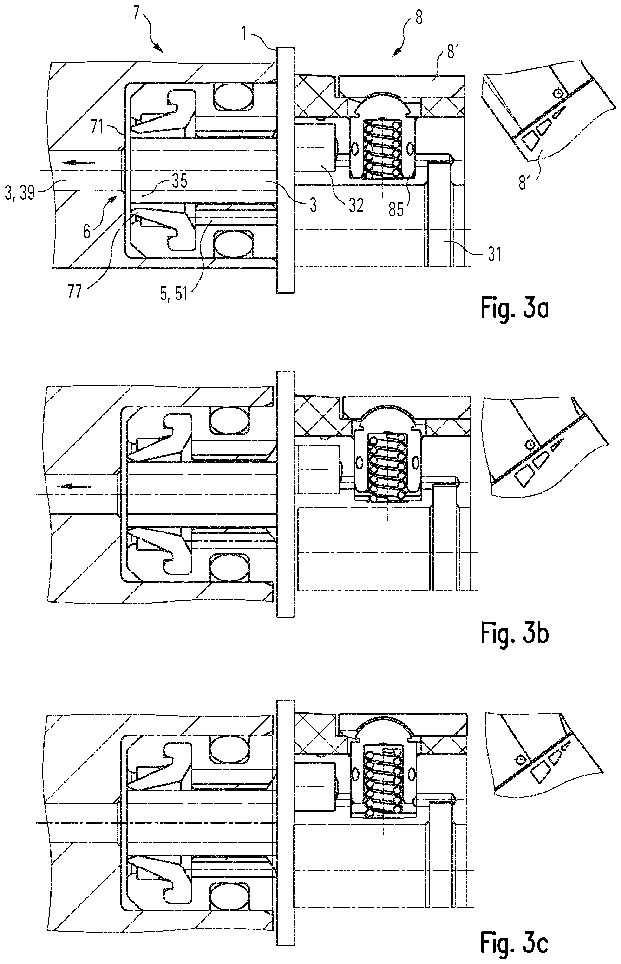

In Fig. 3a ist im linken Bereich in einem Längsschnitt schematisch eine Umgebung des Ventils 7 skizziert. Dabei ist das Ventil 7 in einem geöffneten Zustand gezeigt; in der zweiten Leitungsanordnung 5 herrscht hierbei ein höherer Druck als an der, dem Ventil 7 benachbarten Stelle 6 in der ersten Leitungsanordnung 3. Dies ist beispielsweise der Fall, wenn der, in der zweiten Leitungsanordnung 5 herrschende erste Überdruck 1 bar beträgt und an der Stelle 6 der ersten Leitungsanordnung 3 kein Überdruck herrscht.

Die erste Leitungsanordnung 3 kann eine erste Rohrleitung 35 aufweisen, die sich insbesondere innerhalb des Griffteils 11 erstreckt. Die zweite Leitungsanordnung 5 kann eine zweite Rohrleitung 51 aufweisen, die sich um die erste Rohrleitung 35 herum erstreckt, so dass für das zweite Fluid - im normalen Querschnitt betrachtet - ein ringförmiger Strömungsbereich gebildet ist, der innen durch die erste Rohrleitung 35 begrenzt ist und außen durch die zweite Rohrleitung 51. Diese Gestaltung ist in dem genannten Längsschnitt der Fig. 3a angedeutet.

Das Ventil 7 ist dabei vorzugsweise an einem Endbereich der zweiten Rohrleitung 51 ausgebildet, so dass es - bei entsprechenden Druckverhältnissen - dichtend von außen gegen die erste Rohrleitung 35 in Anlage kommt und hierdurch geschlossen ist. Bei geöffnetem Ventil 7 strömt das zweite Fluid - wie in Fig. 3a skizziert - durch das Ventil 7 hindurch und gelangt in einen Kammerbereich 71; Letzterer geht in einen Endabschnitt 39 der ersten Leitungsanordnung 3 über, der sich durch die Kanüle 14 bis zu der Düse 2 hin erstreckt und dort nach außen mündet.

Herstellungstechnisch vorteilhaft kann das Ventil 7 nach Art eines Dichtrings gestaltet sein. Dabei ist die Gestaltung vorzugsweise derart, dass ein Anpressdruck, mit dem die durch den Dichtring gebildete Ventillippe 77 gegen die erste Rohrleitung 35 gedrückt wird, mit steigendem Druck in der ersten Leitungsanordnung 3 an der Mündung bzw. Stelle 6 zunimmt.

Um geeignet zu ermöglichen, dass in der ersten Leitungsanordnung 3 an der Stelle 6 ein niedrigerer Druck herrscht als in der zweiten Leitungsanordnung 5, weist das Pulverstrahlgerät vorzugsweise in einem, der Stelle 6 vorgeordneten Abschnitt der ersten Leitungsanordnung 3 - also zwischen der Stelle 6 und dem Anschluss 4 - angeordnete Mittel 8 zum Freigeben und zum Sperren des Abschnitts der ersten Leitungsanordnung 3 auf. Besonders bevorzugt sind diese Mittel 8 zum Freigeben und zum Sperren des Abschnitts der ersten Leitungsanordnung 3 dem Behälter 1 vorgeordnet ausgebildet, also zwischen dem Anschluss 4 und dem Behälter 1.

Die Mittel 8 zum Freigeben und zum Sperren des Abschnitts der ersten Leitungsanordnung 3 umfassen vorzugsweise ein Wegeventil mit zwei Anschlüssen und mindestens zwei Schaltstellungen. Ein erster der zwei Anschlüsse ist mit einem Teilbereich 31 der ersten Leitungsanordnung 3 verbunden, der sich zwischen den Mitteln 8 zum Freigeben und zum Sperren des Abschnitts der ersten Leitungsanordnung 3 und dem Anschluss 4 des Pulverstrahlgeräts erstreckt. Ein zweiter der zwei Anschlüsse ist mit einem weiteren Teilbereich 32 der ersten Leitungsanordnung 3 verbunden, der sich zwischen den Mitteln 8 zum Freigeben und zum Sperren des Abschnitts der ersten Leitungsanordnung 3 und der Stelle 6 bzw. dem Behälter 1 erstreckt.

Eine erste der wenigstens zwei Schaltstellungen ist eine Freigabe-Stellung, in der der erste Teilbereich 31 leitend mit dem weiteren Teilbereich 32 verbunden ist, eine zweite der wenigstens zwei Schaltstellungen ist eine Sperr-Stellung, in der der erste Teilbereich 31 nicht leitend mit dem weiteren Teilbereich 32 verbunden ist.

Wie im rechten Bereich der Fig. 3a - lediglich sehr schematisch - angedeutet, können die Mittel 8 zum Freigeben und zum Sperren des Abschnitts der ersten Leitungsanordnung 3 beispielsweise in Form eines von außen manipulierbaren Drehrings 81 des Pulverstrahlgeräts gestaltet sein, wobei das Wegeventil durch ein Drehen des Drehrings 81 eingestellt werden kann, also in eine gewünschte Schaltstellung gebracht werden kann. Das Wegeventil kann beispielsweise einen Stößel 85 aufweisen, der dazu ausgestaltet ist, in der Sperr-Stellung den betreffenden Medienweg zu versperren und in der Freigabe-Stellung offen zu halten.

In Fig. 3a ist weiterhin sehr schematisch angedeutet, dass sich zwischen dem Wegeventil und dem Ventil 7 der Behälter 1 befindet.

Falls sich also das Wegeventil - wie in den Figuren 2 und 3a angedeutet - in der zweiten Schaltstellung bzw. in der Sperr-Stellung befindet, lässt sich erzielen, dass in der ersten Leitungsanordnung 3 an der Stelle 6 kein Überdruck herrscht. Wenn in diesem Fall der, in der zweiten Leitungsanordnung 5 herrschende zweite Überdruck 1 bar beträgt, ist das Ventil 7 geöffnet und das zweite Fluid strömt an der Stelle 6 in die erste Leitungsanordnung 3 hinein und im Weiteren über die Düse 2 nach außen.

Falls sich das Wegeventil - wie in Fig. 3c in analoger Weise angedeutet - in der ersten Schaltstellung bzw. in der Freigabe-Stellung befindet, lässt sich erzielen, dass in der ersten Leitungsanordnung 3 an der Stelle 6 ein höherer Druck herrscht - beispielsweise der genannte erste Überdruck von 3 bar - als in der zweiten Leitungsanordnung 5. In diesem Fall ist somit das Ventil 7 geschlossen und das zweite Fluid strömt nicht in die erste Leitungsanordnung 3 hinein.

Weiterhin vorzugsweise umfasst das Pulverstrahlgerät außerdem eine dritte Leitungsanordnung 9, die sich von dem Anschluss 4 durch das Gerät bis zur Düse 2 erstreckt und dazu ausgebildet ist, Wasser zu der Düse 2 zu leiten. Vorzugsweise ist die Gestaltung der Düse 2 dabei derart, dass sich das Wasser im Bereich der Düse 2 mit der über die erste Leitungsanordnung 3 abgegebenen Mischung, gebildet aus dem Pulver und dem ersten Fluid, vermischt.

Vorzugsweise ist die Gestaltung derart, dass das Wasser dem Pulverstrahlgerät von der Versorgungseinheit 10 zur Verfügung gestellt werden kann, insbesondere mittels einer dritten Zufuhrleitung 23, die sich wiederum durch den Versorgungsschlauch erstrecken kann. Die Gestaltung des Pulverstrahlgeräts ist vorzugsweise derart, dass das Wasser dem Pulverstrahlgerät unter einem dritten Überdruck stehend zur Verfügung gestellt werden kann, insbesondere von der Versorgungseinheit 10.

Vorzugsweise ist die dritte Leitungsanordnung 9 bis zur Düse 2 unabhängig von der ersten Leitungsanordnung 3 und unabhängig von der zweiten Leitungsanordnung 5 gestaltet.

Vorzugsweise kann das Pulverstrahlgerät weiterhin (in den Figuren nicht gezeigte) Mittel zum Freigeben und zum Sperren der dritten Leitungsanordnung 9 aufweisen. So lässt sich erzielen, dass die Wasserzufuhr zur Düse 2 ein- oder ausgeschaltet werden kann.

Die Versorgungseinheit 10 der zahnmedizinische Anordnung ist dementsprechend dazu ausgestaltet, dem Pulverstrahlgerät das erste Fluid und das zweite Fluid zur Verfügung zu stellen, und zwar insbesondere das erste Fluid mit dem ersten Überdruck zur Verfügung zu stellen und das zweite Fluid mit dem zweiten Überdruck, wobei der zweite Überdruck niedriger ist als der erste Überdruck.

Beispielsweise ist dabei der erste Überdruck höher als 2 bar, vorzugsweise höher als 2,5 bar und der zweite Überdruck niedriger als 1,5 bar, vorzugsweise niedriger als 1 bar.

Mit der beschriebenen Gestaltung eignet sich das Pulverstrahlgerät für die folgenden drei Funktionsweisen:
Für eine erste Funktionsweise "Zahnreinigung" befindet sich das Wegeventil, wie in Fig. 3c skizziert, in der Freigabe-Stellung. Das erste Fluid wird durch den ersten Überdruck angetrieben über den Anschluss 4 in den Behälter 1 getrieben, dort bildet sich die Mischung. Druckbedingt wird die Mischung dann weiter durch die erste Leitungsanordnung 3 gefördert und schließlich über die Düse 2 nach außen abgegeben. Der Teilbereich der ersten Leitungsanordnung 3, der sich zwischen dem Behälter 1 und der Düse 2 erstreckt, kann dementsprechend auch als "Pulvergemisch-Kanal" bezeichnet werden.

Außerdem wird das Wasser über die dritte Leitungsanordnung 9 - mit dem dritten Überdruck angetrieben - über die Düse 2 abgegeben. Der so gebildete, über die Düse 2 abgegebene Abgabestrom, bestehend aus der Mischung und dem Wasser eignet sich zur Reinigung einer Zahnoberfläche.

Da das Ventil 7 hierbei geschlossen ist, ist ein Rückfließen der Mischung in die zweite Leitungsanordnung 5 verhindert. Die zweite Leitungsanordnung 5 ist durch das Ventil 7 entlastet.

Für eine zweite Funktionsweise "Reinigung" befindet sich das Wegeventil, wie in Fig. 3a skizziert, in der Sperr-Stellung. Die erste Leitungsanordnung 3 ist ab dem Wegeventil drucklos. Es wird kein Pulver bzw. keine Mischung gebildet aus dem Pulver und dem ersten Fluid gefördert. Das zweite Fluid wird durch den zweiten Überdruck angetrieben durch die zweite Leitungsanordnung 5 gefördert. Das Ventil 7 ist aufgrund der Druckverhältnisse geöffnet, so dass das zweite Fluid an der Stelle 6 in die erste Leitungsanordnung 3 einströmt und im Weiteren über die Düse 2 abgegeben wird.

Das Wasser wird mit dem dritten Überdruck angetrieben durch die dritte Leitungsanordnung 9 gefördert und über die Düse 2 abgegeben. An der Düse 2 verbinden sich das Wasser und das zweite Fluid und bilden so ein "Reinigungsspray". Mit diesem Reinigungsspray kann die Zahnoberfläche gereinigt werden. Bei der Zahnoberfläche kann es sich beispielsweise um eine Kavität handeln.

Außerdem können bei dieser Funktionsweise durch das zweite Fluid etwa noch in der ersten Leitungsanordnung 3 im "Pulver-Mischkanal" befindliche Teilchen des Pulvers ausgeblasen werden.

Für eine dritte Funktionsweise "Reinigung des Pulver-Mischkanals" befindet sich das Wegeventil, wie in Fig. 3a skizziert, in der Sperr-Stellung. Die Mittel zum Freigeben und zum Sperren der dritten Leitungsanordnung 9 befinden sich in der Sperr-Stellung, so dass kein Wasser zur Düse 2 geleitet wird.

Das zweite Fluid wird durch den zweiten Überdruck angetrieben durch die zweite Leitungsanordnung 5 gefördert. Das Ventil 7 ist aufgrund der Druckverhältnisse geöffnet, so dass das zweite Fluid an der Stelle 6 in die erste Leitungsanordnung 3 einströmt und im Weiteren über die Düse 2 abgegeben wird.

Auf diese Weise lässt sich der Pulver-Mischkanal freiblasen, insbesondere im Bereich der Kanüle 14. Diese Funktion lässt sich beispielsweise durch eine "permanente" oder zeitgesteuerte oder separate Aufschaltung des zweiten Fluids bewirken.

Beispielsweise kann vorgesehen sein, dass sich zur Durchführung dieser Funktionsweise das Handstück in einer Ablage der zahnärztlichen Anordnung befindet.

Wie in Fig. 2 skizziert, können die Mittel 8 zum Freigeben und zum Sperren des Abschnitts der ersten Leitungsanordnung 3 außerdem für ein gedrosseltes Freigeben des Abschnitts der ersten Leitungsanordnung 3 ausgebildet sein. Wie skizziert, kann hierzu das Wegventil eine entsprechende dritte Schaltstellung aufweisen, die eine Drossel-Stellung ist. In Fig. 3b ist ein entsprechender Fall skizziert, in der sich das Wegeventil in der Drossel-Stellung befindet. Dabei kann die Gestaltung derart sein, dass in der Drossel-Stellung der in der ersten Leitungsanordnung 3 an der Stelle 6 herrschende Druck größer ist als der in der zweiten Leitungsanordnung 5 herrschende Druck, so dass das Ventil 7 geschlossen ist.

In der Drossel-Stellung kann die erste Funktionsweise "Zahnreinigung" durchgeführt werden, wobei die Mischung - im Vergleich zu der Situation, in der sich das Wegeventil in der oben genannten Freigabe-Stellung befindet - über die Düse 2 mit einem reduzierten Druck abgegeben wird.

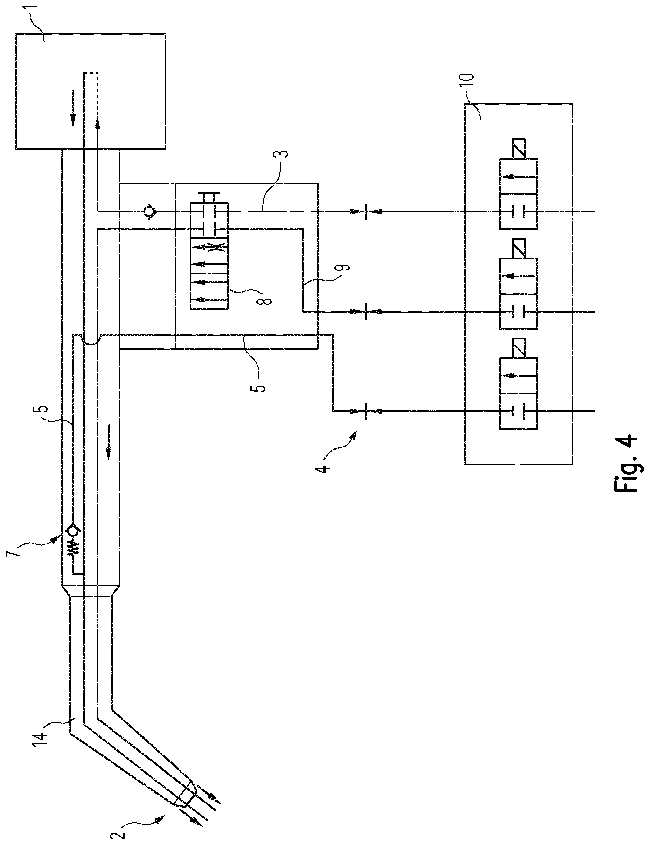

Wie in Fig. 4 schematisch angedeutet, können die Mittel 8 zum Freigeben und zum Sperren des Abschnitts der ersten Leitungsanordnung 3 und die Mittel zum Freigeben und zum Sperren der dritten Leitungsanordnung 9 derart in Abhängigkeit voneinander gestaltet sind, dass die dritte Leitungsanordnung 9 freigegeben ist, wenn der Abschnitt der ersten Leitungsanordnung 3 freigegeben ist und dass die dritte Leitungsanordnung 9 gesperrt ist, wenn der Abschnitt der ersten Leitungsanordnung 3 gesperrt ist.

Insbesondere kann das Wegeventil bei dieser Gestaltung hierzu vier Anschlüsse aufweisen, wie in Fig. 4 skizziert und wenigstens zwei Schaltstellungen, wobei die erste Schaltstellung eine Freigabe-Stellung ist, in der sowohl der erste Teilbereich 31 leitend mit dem zweiten Teilbereich 32 verbunden ist, als auch die dritte Leitungsanordnung 9 freigeschaltet ist. Die zweite Schaltstellung ist eine Sperr-Stellung, in der der erste Teilbereich 31 nicht leitend mit dem zweiten Teilbereich 32 verbunden ist und auch die dritte Leitungsanordnung 9 gesperrt ist.

Durch diese Gestaltung lässt sich eine vereinfachte Handhabung erzielen. Wenn sich das Wegeventil dieser Gestaltung in der Sperr-Stellung befindet, ist eine Trocknung und ein Freiblasen des Arbeitsbereichs durch Abgabe des zweiten Fluids möglich.

Auch bei dieser Gestaltung kann das Wegeventil - wie in Fig. 4 angedeutet - eine Drosselstellung aufweisen, in der vorzugsweise die erste Leitungsanordnung 3 gedrosselt ist, jedoch die dritte Leitungsanordnung 9 nicht gedrosselt ist.

Es können weiterhin auch Mittel zum Freigeben oder Sperren der zweiten Leitungsanordnung 5 vorgesehen sein. So lässt sich die Zufuhr des zweiten Fluids zu der Düse 2 insbesondere auch in einem Fall sperren, in dem auch die erste Leitungsanordnung 3 durch die Mittel 8 gesperrt sind. Beispielsweise lässt sich so lediglich Wasser über die Düse 2 abgeben.

Die Gestaltung kann auch derart sein, dass die drei genannten Medien erstes Fluid, zweites Fluid und Wasser unabhängig voneinander ein- und ausgeschaltet werden können. Das Pulverstrahlgerät kann dementsprechend (in den Figuren nicht gezeigte) drei unabhängig voneinander schaltbare Ventilanordnungen aufweisen.

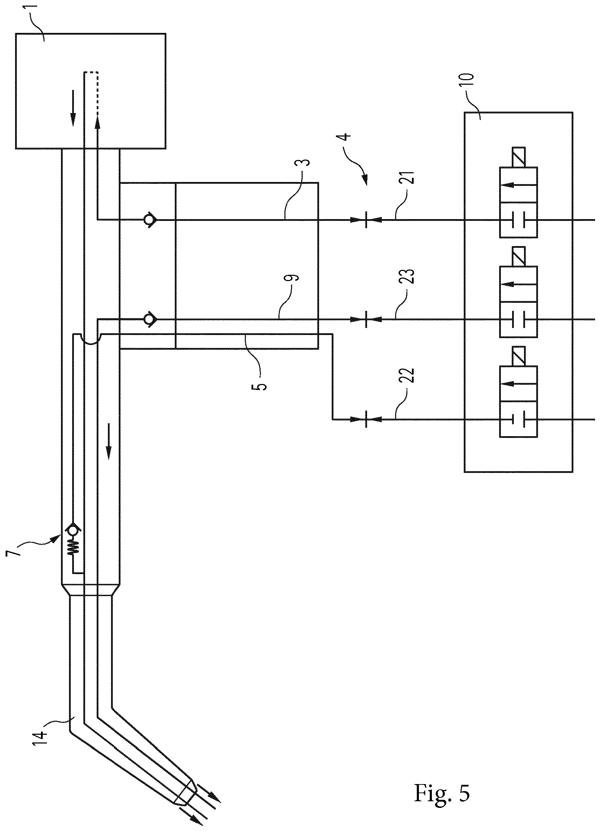

Wie in Fig. 5 skizziert, kann auch vorgesehen sein, dass das Pulverstrahlgerät keine manuell schaltbare Ventilanordnung in den drei genannten Leitungsanordnungen 3, 5, 9 aufweist. Es können drei schaltbare Ventilanordnungen in der Versorgungseinheit 10 ausgebildet sein, durch die sich die drei entsprechenden Zufuhrleitungen 21, 22, 23 freigeben und sperren lassen. Die Ventilanordnungen der Versorgungseinheit 10 können beispielsweise über Taster oder Schalter, insbesondere Fußschalter einstallbar gestaltet sein. Es kann auch eine entsprechende programmierbare Steuerung in einer Software vorgesehen sein. Ein Regelventil im Handgerät ist in diesem Fall nicht erforderlich.

Die Gestaltung der Leitungsanordnungen 3, 5, 9 kann so sein, wie in den Figuren mit den üblichen Symbolen dargestellt; insbesondere kann vorgesehen sein, dass die Leitungsanordnungen 3, 5, 9 lediglich die gezeigten Ventilanordnungen aufweisen, jedoch keine weiteren Ventilanordnungen oder sonstige Elemente zur Beeinflussung eines entsprechenden Fluid- bzw. Wasser-Stroms.

Die in Fig. 5 gezeigte Gestaltung eignet sich sowohl für Handstücke mit einer Schnellkupplung, also beispielsweise mit der genannten Multiflex-Kupplung, als auch für so genannten Festanschluss-Instrumente, bei denen ein Versorgungsschlauch zwischen der Versorgungseinheit 10 und dem Handinstrument an Letzterem nicht über eine Schnellkupplung verbunden ist, sondern über eine Schraubverbindung.

Dabei sind insbesondere folgende Zusammensetzungen der abgegebenen Medien möglich:
- Mischung (ohne Wasser und ohne zweites Fluid)
- Mischung und Wasser (ohne zweites Fluid)
- Wasser (ohne erstes Fluid und ohne zweites Fluid)
- Zweites Fluid (ohne erstes Fluid und ohne Wasser)
- Zweites Fluid und Wasser (ohne erstes Fluid)

## Patentansprüche

1. Zahnmedizinisches Pulverstrahlgerät, aufweisend
- einen Behälter (1) für ein abrasives Pulver,
- eine Düse (2),
- eine erste Leitungsanordnung (3), die sich von einem Anschluss (4) des Pulverstrahlgeräts durch den Behälter (1) zu der Düse (2) erstreckt und dazu ausgebildet ist, eine Mischung, gebildet aus dem Pulver und einem, dem Pulverstrahlgerät zur Verfügung gestellten ersten Fluid zu der Düse (2) zu leiten,
- eine zweite Leitungsanordnung (5), die sich von dem Anschluss (4) des Pulverstrahlgeräts erstreckt und dazu ausgebildet ist, ein dem Pulverstrahlgerät zur Verfügung gestelltes, in Bezug auf das erste Fluid gleichartiges zweites Fluid an einer, dem Behälter (1) für das abrasive Pulver nachgeordneten Stelle (6) in die erste Leitungsanordnung (3) einzuleiten,
wobei das Pulverstrahlgerät als ein Handgerät gestaltet ist, welches ein Griffteil (11) sowie am vorderen Endbereich eine die Düse (2) enthaltende Kanüle (14) aufweist, und
wobei die Stelle (6), an der die zweite Leitungsanordnung (5) in die erste Leitungsanordnung (3) mündet, in einem Übergangsbereich zwischen dem Griffteil (11) und der Kanüle (14) ausgebildet ist,
**dadurch gekennzeichnet**
**dass** an der Stelle (6), an der die zweite Leitungsanordnung (5) in die erste Leitungsanordnung (3) mündet, ein Ventil (7) zum Freigeben und zum Sperren der zweiten Leitungsanordnung (5) angeordnet ist,
wobei das Ventil (7) derart gestaltet ist, dass die zweite Leitungsanordnung (5) für das zweite Fluid leitend mit der ersten Leitungsanordnung (3) verbunden ist, wenn in der zweiten Leitungsanordnung (5) ein höherer Druck herrscht als in der ersten Leitungsanordnung (3) und
**dass** die zweite Leitungsanordnung (5) für das zweite Fluid nicht leitend mit der ersten Leitungsanordnung (3) verbunden ist, wenn in der zweiten Leitungsanordnung (5) ein niedrigerer Druck herrscht als in der ersten Leitungsanordnung (3).

2. Pulverstrahlgerät nach Anspruch 1,
**dadurch gekennzeichnet,**
**dass** das Ventil (7) nach Art eines Dichtrings gestaltet ist.

3. Pulverstrahlgerät nach Anspruch 2,
**dadurch gekennzeichnet,**
**dass** die erste Leitungsanordnung (3) eine erste Rohrleitung (35) und die zweite Leitungsanordnung (5) eine zweite Rohrleitung (51) aufweist, welche sich um die erste Rohrleitung herum erstreckt,
wobei beide Rohrleitungen in einen gemeinsamen Kammerbereich (71) münden, der in einen sich zur Düse (2) erstreckenden Endabschnitt der ersten Leitungsanordnung (3) übergeht, und wobei das Ventil (7) an einem Endbereich der zweiten Rohrleitung (51) ausgebildet ist.

4. Pulverstrahlgerät nach Anspruch 3,
**dadurch gekennzeichnet,**
**dass** der Dichtring am vorderen Ende der zweiten Rohrleitung (51) angeordnet ist und eine Ventillippe (77) bildet, welche am Außenumfang der ersten Rohrleitung (35) anliegt.

5. Pulverstrahlgerät nach einem der vorhergehenden Ansprüche,
**dadurch gekennzeichnet,**
**dass** in einem, der Stelle (6) vorgeordneten Abschnitt der ersten Leitungsanordnung (3) Mittel (8) zum Freigeben oder Sperren des Abschnitts der ersten Leitungsanordnung (3) angeordnet sind.

6. Pulverstrahlgerät nach Anspruch 5,
**dadurch gekennzeichnet,**
**dass** die Mittel (8) zum Freigeben oder Sperren des Abschnitts der ersten Leitungsanordnung (3) dem Behälter (1) vorgeordnet ausgebildet sind.

7. Pulverstrahlgerät nach Anspruch 5 oder 6,
**dadurch gekennzeichnet,**
**dass** die Mittel (8) zum Freigeben oder Sperren des Abschnitts der ersten Leitungsanordnung (3) außerdem für ein gedrosseltes Freigeben des Abschnitts der ersten Leitungsanordnung (3) ausgebildet sind.

8. Pulverstrahlgerät nach einem der Ansprüche 5 bis 7,
**dadurch gekennzeichnet,**
**dass** die Mittel (8) zum Freigeben oder Sperren des Abschnitts der ersten Leitungsanordnung (3) mit einem Bedienelement gekoppelt sind, welches vorzugsweise als Drehring (81) ausgebildet ist.

9. Pulverstrahlgerät nach einem der vorhergehenden Ansprüche,
**gekennzeichnet durch**
- eine dritte Leitungsanordnung (9), die dazu ausgebildet ist, Wasser zu der Düse (2) zu leiten.

10. Pulverstrahlgerät nach Anspruch 9,
**dadurch gekennzeichnet,**
**dass** sich die dritte Leitungsanordnung (9) getrennt von der ersten und zweiten Leitungsanordnung (3, 5) von dem Anschluss (4) durch das Pulverstrahlgerät zur Düse (2) erstreckt.

11. Pulverstrahlgerät nach Anspruch 9 oder 10,
**dadurch gekennzeichnet,**
**dass** die Düse (2) derart gestaltet ist, dass sich das Wasser im Bereich der Düse (2) mit der über die erste Leitungsanordnung (3) abgegebenen Mischung, gebildet aus dem Pulver und dem ersten Fluid, vermischt.

12. Pulverstrahlgerät nach einem der Ansprüche Anspruch 9 bis 11,
**gekennzeichnet durch**
- Mittel zum Freigeben oder Sperren der dritten Leitungsanordnung (9).

13. Pulverstrahlgerät nach einem der vorhergehenden Ansprüche,
**gekennzeichnet durch**
- Mittel zum Freigeben oder Sperren der zweiten Leitungsanordnung (5).

## Claims

1. Dental powder-jet device having
- a container (1) for an abrasive powder,
- a nozzle (2),
- a first line arrangement (3) which extends from a connection (4) of the powder-jet device, through the container (1), to the nozzle (2) and is configured to conduct to the nozzle (2) a mixture formed from the powder and a first fluid made available to the powder-jet device,
- a second line arrangement (5) which extends from the connection (4) of the powder-jet device and is configured to introduce into the first line arrangement (3), at a point (6) situated downstream of the container (1) for the abrasive powder, a second fluid made available to the powder-jet device that is of the same type as the first fluid,
wherein the powder-jet device is designed as a handheld device which has a grip part (11) and, at the front end region, a cannula (14) which contains the nozzle (2), and
wherein the point (6) where the second line arrangement (5) opens out into the first line arrangement (3) is formed in a transition region between the grip part (11) and the cannula (14),
**characterized**
**in that** a valve (7) for opening up and for blocking the second line arrangement (5) is arranged at the point (6) where the second line arrangement (5) opens out into the first line arrangement (3),
wherein the valve (7) is designed in such a way that the second line arrangement (5) for the second fluid is connected in a conducting manner to the first line arrangement (3) if a greater pressure prevails in the second line arrangement (5) than in the first line arrangement (3), and
**in that** the second line arrangement (5) for the second fluid is not connected in a conducting manner to the first line arrangement (3) if a lower pressure prevails in the second line arrangement (5) than in the first line arrangement (3).

2. Powder-jet device according to Claim 1,
**characterized**
**in that** the valve (7) is designed in the manner of a sealing ring.

3. Powder-jet device according to Claim 2,
**characterized**
**in that** the first line arrangement (3) has a first tube (35) and the second line arrangement (5) has a second tube (51), which extends around the first tube,
wherein both tubes open out into a common chamber region (71), which transitions into an end portion, extending to the nozzle (2), of the first line arrangement (3), and wherein the valve (7) is formed at an end region of the second tube (51).

4. Powder-jet device according to Claim 3,
**characterized**
**in that** the sealing ring is arranged on the front end of the second tube (51) and forms a valve lip (77) which bears against the outer circumference of the first tube (35).

5. Powder-jet device according to one of the preceding claims,
**characterized**
**in that**, in a portion, situated upstream of the point (6), of the first line arrangement (3), there are arranged means (8) for opening up or blocking the portion of the first line arrangement (3).

6. Powder-jet device according to Claim 5,
**characterized**
**in that** the means (8) for opening up or blocking the portion of the first line arrangement (3) are situated upstream of the container (1).

7. Powder-jet device according to Claim 5 or 6,
**characterized**
**in that** the means (8) for opening up or blocking the portion of the first line arrangement (3) are moreover designed for throttled opening-up of the portion of the first line arrangement (3).

8. Powder-jet device according to one of Claims 5 to 7,
**characterized**
**in that** the means (8) for opening up or blocking the portion of the first line arrangement (3) are coupled to an operator control element, which is preferably designed as a rotary ring (81).

9. Powder-jet device according to one of the preceding claims,
**characterized by**
- a third line arrangement (9) which is configured to conduct water to the nozzle (2).

10. Powder-jet device according to Claim 9,
**characterized**
**in that** the third line arrangement (9) extends from the connection (4), through the powder-jet device, to the nozzle (2) separately from the first and second line arrangements (3, 5).

11. Powder-jet device according to Claim 9 or 10,
**characterized**
**in that** the nozzle (2) is designed in such a way that, in the region of the nozzle (2), the water mixes with the mixture, formed from the powder and the first fluid, that is delivered via the first line arrangement (3).

12. Powder-jet device according to one of Claims 9 to 11,
**characterized by**
- means for opening up or blocking the third line arrangement (9).

13. Powder-jet device according to one of the preceding claims,
**characterized by**
- means for opening up or blocking the second line arrangement (5).

## Revendications

1. Appareil dentaire à jet de poudre, présentant
- un récipient (1) pour une poudre abrasive,
- une buse (2),
- un premier agencement de conduite (3) s'étendant depuis un raccord (4) de l'appareil à jet de poudre à travers le récipient (1) jusqu'à la buse (2) et réalisé pour acheminer un mélange formé de la poudre et d'un premier fluide fourni à l'appareil à jet de poudre vers la buse (2),
- un deuxième agencement de conduite (5) s'étendant depuis le raccord (4) de l'appareil à jet de poudre et réalisé pour acheminer un deuxième fluide, identique au premier fluide, fourni à l'appareil à jet de poudre, à un emplacement (6) situé en aval du récipient (1) pour la poudre abrasive dans le premier agencement de conduite (3),
l'appareil à jet de poudre étant conçu sous la forme d'un appareil à main qui présente une partie de poignée (11) ainsi qu'une canule (14) contenant la buse (2) au niveau de la zone d'extrémité avant, et
l'emplacement (6) au niveau duquel le deuxième agencement de conduite (5) débouche dans le premier agencement de conduite (3) étant réalisé dans une zone de transition entre la partie de poignée (11) et la canule (14),
**caractérisé en ce**
**qu'**à l'emplacement (6) au niveau duquel le deuxième agencement de conduite (5) débouche dans le premier agencement de conduite (3), une soupape (7) est agencée pour libérer et pour bloquer le deuxième agencement de conduite (5),
la soupape (7) étant conçue de telle sorte que le deuxième agencement de conduite (5) pour le deuxième fluide est relié de manière conductrice au premier agencement de conduite (3) lorsqu'il règne une pression plus élevée dans le deuxième agencement de conduite (5) que dans le premier agencement de conduite (3), et
en ce que le deuxième agencement de conduite (5) pour le deuxième fluide n'est pas relié de manière conductrice au premier agencement de conduite (3) lorsqu'il règne une pression plus faible dans le deuxième agencement de conduite (5) que dans le premier agencement de conduite (3) .

2. Appareil à jet de poudre selon la revendication 1,
**caractérisé en ce que**
la soupape (7) est conçue à la manière d'une bague d'étanchéité.

3. Appareil à jet de poudre selon la revendication 2,
**caractérisé en ce que**
le premier agencement de conduite (3) présente une première conduite tubulaire (35) et le deuxième agencement de conduite (5) présente une deuxième conduite tubulaire (51) qui s'étend autour de la première conduite tubulaire,
les deux conduites tubulaires débouchant dans une zone de chambre commune (71) qui se raccorde à une section d'extrémité du premier agencement de conduite (3) s'étendant vers la buse (2), et la soupape (7) étant réalisée au niveau d'une zone d'extrémité de la deuxième conduite tubulaire (51).

4. Appareil à jet de poudre selon la revendication 3,
**caractérisé en ce que**
la bague d'étanchéité est agencée à l'extrémité avant de la deuxième conduite tubulaire (51) et forme une lèvre de soupape (77) qui s'appuie sur la périphérie extérieure de la première conduite tubulaire (35).

5. Appareil à jet de poudre selon l'une quelconque des revendications précédentes,
**caractérisé en ce que**
des moyens (8) sont agencés dans une section du premier agencement de conduite (3) située en amont de l'emplacement (6) pour libérer ou bloquer la section du premier agencement de conduite (3).

6. Appareil à jet de poudre selon la revendication 5,
**caractérisé en ce que**
les moyens (8) pour libérer ou bloquer la section du premier agencement de conduite (3) sont réalisés en amont du récipient (1).

7. Appareil à jet de poudre selon la revendication 5 ou 6,
**caractérisé en ce que**
les moyens (8) pour libérer ou bloquer la section du premier agencement de conduite (3) sont en outre réalisés pour une libération étranglée de la section du premier agencement de conduite (3).

8. Appareil à jet de poudre selon l'une quelconque des revendications 5 à 7,
**caractérisé en ce que**
les moyens (8) pour libérer ou bloquer la section du premier agencement de conduite (3) sont couplés à un élément de commande qui est de préférence réalisé sous forme de bague rotative (81).

9. Appareil à jet de poudre selon l'une quelconque des revendications précédentes,
**caractérisé par**
- un troisième agencement de conduite (9) réalisé pour acheminer de l'eau vers la buse (2).

10. Appareil à jet de poudre selon la revendication 9,
**caractérisé en ce que**
le troisième agencement de conduite (9) s'étend séparément des premier et deuxième agencements de conduite (3, 5) depuis le raccord (4) à travers l'appareil à jet de poudre jusqu'à la buse (2).

11. Appareil à jet de poudre selon la revendication 9 ou 10,
**caractérisé en ce que**
la buse (2) est conçue de telle sorte que l'eau dans la zone de la buse (2) se mélange avec le mélange formé de la poudre et du premier fluide distribué par le biais du premier agencement de conduite (3).

12. Appareil à jet de poudre selon l'une quelconque des revendications 9 à 11,
**caractérisé par**
- des moyens pour libérer ou bloquer le troisième agencement de conduite (9).

13. Appareil à jet de poudre selon l'une quelconque des revendications précédentes,
**caractérisé par**
- des moyens pour libérer ou bloquer le deuxième agencement de conduite (5).
